(19)

**Europäisches Patentamt**
**European Patent Office**
**Office européen des brevets**

(11) **EP 1 760 603 A1**

(12) **EUROPEAN PATENT APPLICATION**

(43) Date of publication:
**07.03.2007 Bulletin 2007/10**

(51) Int Cl.:
*G06F 17/17* (2006.01)   *F02D 41/24* (2006.01)

(21) Application number: **05019125.3**

(22) Date of filing: **02.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SIEMENS AKTIENGESELLSCHAFT 80333 München (DE)**

(72) Inventor: **Brunelli, Marco Claudia Pio, Dr. 56122 Pisa (IT)**

(54) **Procedure for optimizing a map of an engine control unit**

(57)    The present invention relates to a procedure for optimizing the map of an ECU of a car. The map has a tree structure which allows adapting the resolution of map dependent on the specific region. The procedure describes a recursive mechanism in order to calculate an interpolated value.

FIG 3

Start

S1 — $k=1$

S2 — $A(Cam_{in}, Cam_{ex}, P, N)$

S3 — Retrieve $\upsilon_k$

S7 — $k=k+1$

S4 — node of level k only one child?

y → $W_k = S_{k+1}$ — S5

n

S6 — find two children with $S_{k+1,1} < \upsilon_k < S_{k+1,2}$

EP 1 760 603 A1

**Description**

The present invention relates to a procedure for optimizing a map of an ECU.

Based on a set of measurements a steady state model of the physical property given by $y = f(x_1, x_2, ..., x_N)$ must be generated which represents a satisfactory approximation to f wherein f is a static functional relationship, which link N degrees of freedom $x_1, x_2, ... x_N$ to a measured value y. Then each possible constellation of variables $\{x_1, x_2, ... x_N, y\}$ represents a steady state of the technical system which can be operated in a stable manner.

The conceptually simplest approach is to find a punctual approximation to f, which has the goal of being able to reproduce the measured values to a given accuracy. Indeed, excellent measurement reproducibility does not guarantee that f will be well approximated in regions where measurements have not been obtained. By an unluckily model assumption a model can be generated that closely resembles the system near the measurements points, but since the mathematical structure of f has not been properly identified, very misleading results may arise in regions lacking measurements.

Polynomial fit is a classical example of such a situation. It is relatively easy to build polynomials, even in several variables, which perfectly interpolate given measured values of a function. The problem is that when a large number of variables are to be calculated based on a relatively low number of measurements, the fit may become badly conditioned, meaning that there may be many polynomial-structures existing, all perfectly interpolating the measurements, but diverging strongly in regions lying in between measurements. The proliferation of the number of polynomial approximations, which all satisfy the task of measurement interpolation, clearly indicates that the function structure is subject to a significant uncertainty and the punctual approximation does not suffice to properly identify f.

The implementation of a steady-state combustion engine behaviour on the engine control unit (ECU) is often made in form of a map, which is a piecewise linear approximation of a function. The quality of a map is normally measured in terms of overall agreement with the function of practical relevance, meaning normally that the map is supposed to reproduce the experimentally measured function values as good as possible, meanwhile preserving an overall smoothness necessary for steady engine behaviour. Not less importantly, due to the increasing number and complexity of the ECU functions, the map structure has to be simplified.

A map is typically built by filling the definition domain of f with parallelepipeds, whose vertex defines in each dimension a set of breakpoints. An amplitude is associated with each vertex, representing the approximated function value at that point. An ECU of a car works at around 30 MHz, comprises 2MByte of ROM (read only memory) and only 100kByte of RAM (random access memory). Although the ECU comprises a floating-point unit (6-bit wide) more than 90 % of the ECU-software is programmed in fix-point operations. The reason for this is that the fix-point operations are executed much faster than floating-point operations by the ECU. Due to the memory constrains it is not possible to have an infinite number of breakpoints. Therefore the size of the parallelepipeds is more or less big, i.e. the vertex has a certain distance to the next vertex. In order to achieve a smooth running of the engine it is necessary to interpolate interim values.

The drawback of maps with such a structure is that regions with almost no variations (regions of 1st type) and regions with a lot of variations (regions of 2nd type) have the same resolution (same amount of breakpoint) although regions of the 2nd type need higher resolutions than of the 1st type.

To guarantee a steady-state of the engine the resolution of the complete map is set to the lowest resolution which is necessary in the region of the 2nd type. Therefore the interpolation of an interim value in either regions cost the same amount of time and allocates unnecessary memory especially for the region of the 1st type. The resolution for the 1st region could be much lower than the resolution given by the 2nd region.

The present invention is directed to overcome one or more of the problems as set forth above.

The mentioned problem is solved by the features of claim 1.

The present invention proposes a procedure for optimizing a map of the ECU wherein the map has a tree structure, said tree has one first level, at least one middle level and one highest level, the first level has only one node which is attached to at least one child node belonging to the next higher level, the middle level has at least one node, which is attached to at least one child node and to one parent node belonging to the next lower level, the highest level has at least one node which is attached to one parent. The node of level k computes its own interpolated map value $W_k$ by the followings steps. First in step a) an array of coordinates $\mathbf{A} = [v_1, v_2, ..., v_n]$ is received with n : number of variables. Then in step b) the coordinate $v_k$ is retrieved out of the array corresponding to the level k. In the next step c) two corresponding children node of level k+1 are looked for if the node comprises at least two children. In the following step d) both interpolated map values $W_{k+1}$ from each of the said children nodes and their contents are transferred to their common parent node of level k. In the last step e) the interpolated map value $W_k$ is calculated with the interpolated map values of $W_{k+1}$ of level k+1, the contents of said children nodes and the coordinate $v_k$.

An advantage of the present invention is that the tree structure of the map can be easily implemented in an object oriented programming language such as C++ allowing high computing performances needed in an optimization algorithm which requires very high performances.

An advantage of present invention is that the nodes of the middle level comprise the breakpoints of the map and the nodes of the highest level comprise the amplitudes of the map. It is possible for example that a node of a middle level k has 10 children nodes and another node of the same middle level k only has 5 children. This tree structure therefore allows adapting the resolution depending on the region of interest (ROI).

Another advantage of present invention is that in step c) the interpolated map value $W_k$ of a child node is equal to the amplitude if the node comprises only one child. The nodes of the highest level are also called the leaves of the tree structure.

Another advantage of present invention is that in step d) the interpolated map value $W_{k+1}$ of a child node is calculated as in steps a) to e) wherein level k is increased by one. This defines the recursive mechanism of the procedure which allows an implementation in programming language in few code lines. Therewith memory allocation is reduced to a minimum.

Another advantage of present invention is that in step e) the interpolated map value $W_k$ is calculated as follows:

$$W_k = (W_{k+1,2} - W_{k+1,1}) / (S_{k+1,2} - S_{k+1,1}) \cdot (v_k - S_{k+1,1}) + W_{k+1,1}$$

with:

$W_{k+1,1}$ :   interpolated map value of the 1st corresponding child node in level k+1,
$W_{k+1,2}$   : interpolated map value of the 2nd corresponding child node in level k+1,
$S_{k+1,1}$   : content of the 1st corresponding child node in level k+1,
$S_{k+1,2}$ :   content of the 2nd corresponding child node in level k+1 and
$v_k$ :      the given coordinate corresponding to its level k.

This function describes a simple linear interpolation which again allows a very fast calculation of the interpolated value. Other interpolation functions can be used.

Another advantage of present invention is that in step c) the node seeks among the children the two children nodes which fulfill the following equation $S_{k+1,1} < v_k < S_{k+1,2}$ with:

$S_{k+1,1}$ :   having the highest breakpoint value of level k+1 in order to fulfill the above equation,
$S_{k+1,2}$ :   having the lowest breakpoint value of level k+1 in order to fulfill the above equation,
$v_k$ :      the given coordinate corresponding to its level k.

By choosing the closest two children the accuracy of the interpolated value will be highest.

Further advantages of the present invention are given in the remaining dependant claims.

The invention will now be described with reference to the accompanying and schematic drawings wherein:

Figure 1    illustrates a block diagram of the present invention,
Figure 2    illustrates the tree structure of the present invention,
Figure 3    illustrates a flowchart of the present invention.

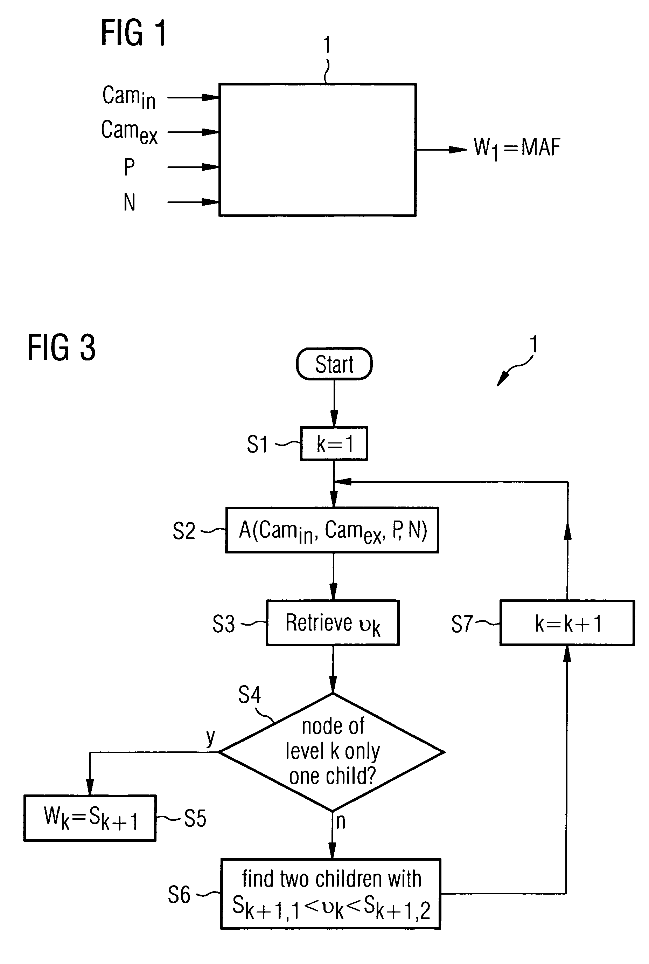

Figure 1 illustrates an example wherein the array given to the procedure of the present invention is defined as $A$ = (Cam$_{in}$, Cam$_{out}$, p, N) with: N : engine revolution, p : air pressure, Cam$_{in}$, out : cam shaft angle. The procedure 1 then calculates the value of the mass air flow (MAF).

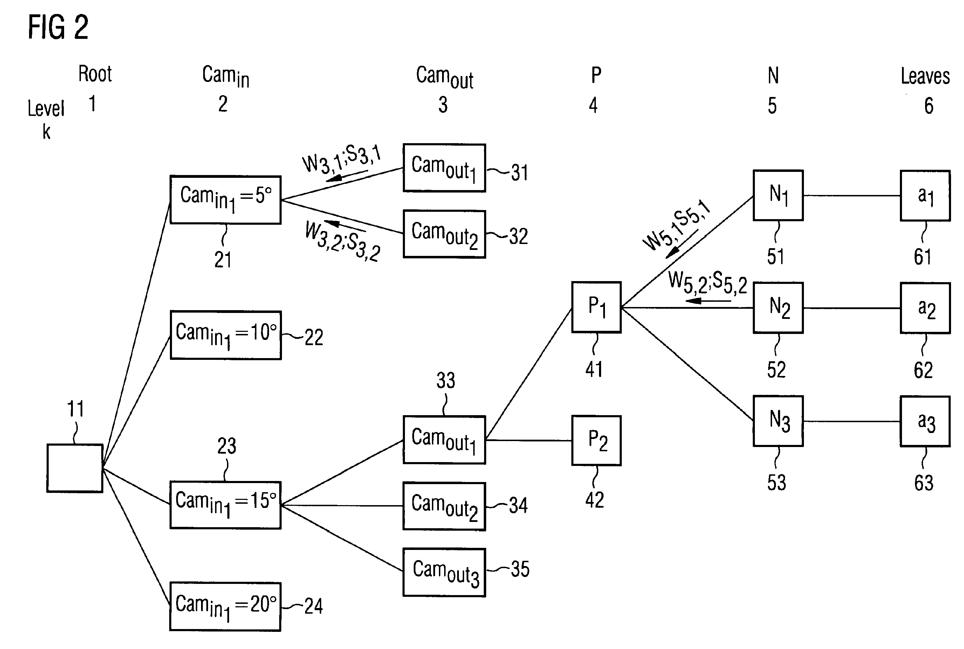

Figure 2 shows a map with a tree structure according to the above example. This tree has 6 levels. The coordinates here are the values of Cam$_{in}$, Cam$_{out}$, p and N which resides in the middle modes from k=2 to k=5. Level 1 comprises only one single node named as root node. The root node 11 comprises only children nodes. In this example the children of the root node are Cam$_{in,1}$ to Cam$_{in,4}$. The nodes in the highest level (here k=6) are called the leaves because they do not have any children.

For the sake of clarity not all nodes have been depicted. The parent nodes of one level do not necessarily have the same number of children. This case is shown in level 2 and 3. For example node 21 of level 2 has only two children nodes 31 and 32 whereas node 23 has three children nodes 33-35. It is noted that the nodes 22 and 24 also have at least two children but for the sake of clarity they have been omitted.

Figure 3 illustrates the flowchart of the present invention. In step S1 the procedure is initialized by setting k=1. Step S2 receives the array $A$ = (Cam$_{in}$, Cam$_{out}$, p, N). Step S3 retrieves from the array $A$ the coordinate $v_k$. As k is equal to 1, $v_1$ will be set to $v_1$ = Cam$_{in}$. In step S4, it is checked if the respective node - here root node 11 - has only one child.

As this is not the case, the procedure will continue in step S6. In this step S6 the two corresponding children are been found. For example the value of the first coordinate is set to $v_1$ = 7,5°. The contents of children nodes 21 - 24 are the breakpoints which have the values $S_{k+1}$. The content of node 21 is $S_{2,1} = 5°$ and the content of node 22 is $S_{2,2} = 10°$. The other two children nodes 23 and 24 do not fulfill the requirement $S_{k+1,1} < v_k < S_{k+1,2}$ and are therefore irrelevant. These two nodes 21 and 22 deliver to their parent node 11 the interpolated value $W_{k+1}$ and their content $S_{k+1}$. In order to deliver the interpolated value of $W_{k+1}$ of each relevant branch the procedure increases the level k by one in step S7 and jumps to step S2. This is repeated until the procedure reaches the level 5. In step S4 it is again checked if the nodes 51 to 53 each only have one child. As this is the case for example node 51 receives the value of the amplitude $a_1$ as the interpolated value $W_5$ (i.e. $W_5 = S_6 = a_1$). Once the interpolated $W_{5,1}$ of the first branch is received the node 51 transfers this value with its breakpoint $S_{5,1}$ to the parent node 41 one level below -here level 4.

As soon as the parent node 41 receives the 2nd interpolated values of the lower level in the second branch - here node 52-the parent node 41 calculates its interpolated value according the following general rule of all nodes:

$$W_k = (W_{k+1,2} - W_{k+1,1})/(S_{k+1,2} - S_{k+1,1}) \cdot (v_k - S_{k+1,1}) + W_{k+1,1}$$

At this level it would result in :

$$W_4 = (a_2 - a_1)/(N_2 - N_1) \cdot (p - N_1) + W_{5,1}$$

wherein k=4; $S_{5,1} = N_1$; $S_{5,2}=N_2$; $W_{5,2} = a_2$; $W_{5,1} = a_1$

This is repeated until the root nodes transfers as output the interpolated value of MAP at a specific point defined by **A**.

This present invention is not restricted to the map of MAF. It is directed to a general map of an ECU in order to interpolate values which are not covered by the breakpoints.

**Claims**

1.    Procedure for optimizing a map of the ECU wherein:

- the map has a tree structure,
- said tree has one first level, at least one middle level and one highest level,
- the first level has only one node which is attached to at least one child node belonging to the next higher level,
- the middle level has at least one node, which is attached to at least one child node and to one parent node belonging to the next lower level,
- the highest level has at least one node which is attached to one parent,

**characterized in that**,
the node of level k computes its own interpolated map value $W_k$ by:

a) receiving an array of coordinates **A** = $[v_1, v_2, ..., v_n]$ with n : number of variables,
b) retrieving the coordinate $v_k$ out of the array corresponding to the level k,
c) looking for two corresponding children node of level k+1 if the node comprises at least two children,
d) transferring both interpolated map values $W_{k+1}$ from each of the said children nodes and their contents to their common parent node of level k,
e) calculating the interpolated map value $W_k$ with the interpolated map values of $W_{k+1}$ of level k+1, the contents of said children nodes and the coordinate $v_k$.

2.    Procedure according to claim 1 wherein the nodes of the middle level comprise the breakpoints of the map and the nodes of the highest level comprise the amplitudes of the map.

3.    Procedure according to at least one of the above claims wherein in step c) the interpolated map value $W_k$ of a child node is equal to the amplitude if the node comprises only one child.

4.    Procedure according to at least one of the above claims wherein in step d) the interpolated map value $W_{k+1}$ of a child node is calculated as in steps a) to e) wherein level k is increased by one.

5. Procedure according to at least one of the above claims wherein in step e) the interpolated map value $W_k$ is calculated as follows:

$$W_k = (W_{k+1,2} - W_{k+1,1}) / (S_{k+1,2} - S_{k+1,1}) \cdot (v_k - S_{k+1,1}) + W_{k+1,1}$$

with:

$W_{k+1,1}$ : interpolated map value of the 1st corresponding child node in level k+1,
$W_{k+1,2}$ : interpolated map value of the 2nd corresponding child node in level k+1,
$S_{k+1,1}$ : content of the 1st corresponding child node in level k+1,
$S_{k+1,2}$ : content of the 2nd corresponding child node in level k+1 and
$v_k$ : the given coordinate corresponding to its level k.

6. Procedure according to at least one of the above claims wherein in step c) the node seeks among the children the two children nodes which fulfill the following equation:

$$S_{k+1,1} < v_k < S_{k+1,2}$$

with:

$S_{k+1,1}$ : having the highest breakpoint value of level k+1 in order to fulfill the above equation,
$S_{k+1,2}$ : having the lowest breakpoint value of level k+1 in order to fulfill the above equation,
$v_k$ : the given coordinate corresponding to its level k.

## FIG 1

Cam$_{in}$ →

Cam$_{ex}$ → [ 1 ] → W$_1$ = MAF

P →

N →

## FIG 3

1

Start

S1 — k = 1

S2 — A(Cam$_{in}$, Cam$_{ex}$, P, N)

S3 — Retrieve $\upsilon_k$

S4 — node of level k only one child?

y → W$_k$ = S$_{k+1}$ — S5

n

S6 — find two children with S$_{k+1,1}$ < $\upsilon_k$ < S$_{k+1,2}$

S7 — k = k+1

FIG 2

**European Patent Office**

**EUROPEAN SEARCH REPORT**

Application Number

EP 05 01 9125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 43 04 441 A1 (ROBERT BOSCH GMBH, 70469 STUTTGART, DE) 18 August 1994 (1994-08-18) <br> * column 5, line 34 - column 9, line 37 * <br> * figures 5,6 * <br> ----- | 1-6 | INV. <br> G06F17/17 <br> F02D41/24 |
| A | HOLZMANN H ET AL: "Representation of 3-D mappings for automotive control applications using neural networks and fuzzy logic" <br> PROCEEDINGS OF THE 1997 IEEE INTERNATIONAL CONFERENCE ON CONTROL APPLICATIONS (CCA), 5-7 OCTOBER 1997, HARTFORD, <br> vol. 6, 5 October 1997 (1997-10-05), pages 229-234, XP000782672 <br> IEEE, New York, USA <br> ISBN: 0-7803-3877-4 <br> * section 2; figure 2 * <br> * section 3.1; figures 3 and 5 * <br> ----- | 1-6 | |
| A | SCHMITT M ET AL: "Associative datafields in automotive control" <br> PROCEEDINGS OF THE THIRD IEEE CONFERENCE ON CONTROL APPLICATIONS, 24-26 AUGUST 1994, GLASGOW, UK, <br> vol. 2, 24 August 1994 (1994-08-24), pages 1239-1244 vol., XP002391609 <br> IEEE NEW YORK, NY, USA <br> ISBN: 0-7803-1872-2 <br> * section II; figure 1 * <br> * section III, introduction; figure 2 * <br> ----- | 1-6 | TECHNICAL FIELDS SEARCHED (IPC) <br><br> G06F <br> F02D |
| A | DE 199 63 213 A1 (ROBERT BOSCH GMBH) 12 July 2001 (2001-07-12) <br> * page 2, line 5 - line 12 * <br> * page 2, line 44 - page 3, line 20 * <br> * page 3, line 40 - line 44 * <br> ----- | 1-6 | |

-/--

The present search report has been drawn up for all claims

| Place of search | Date of completion of the search | Examiner |
|---|---|---|
| Berlin | 28 August 2006 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 01 9125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KNÖDLER K ET AL: "Memory economy for electronic control units: Compression of conventional look-up tables" IN: N. MASTORAKIS (ED.), RECENT ADVANCES IN SIMULATION, COMPUTATIONAL METHODS AND SOFT COMPUTING, 2002, pages 234-239, XP002391608 WSEAS Press Retrieved from the Internet: URL:http://www-ra.informatik.uni-tuebingen.de/publikationen/2002/knoedler_EC2002.pdf > [retrieved on 2006-07-21] * section 2; figure 1 * * section 4, introduction * * figures 4 and 5 * ----- | 1-6 | |
| A | EP 1 344 921 A (DELPHI TECHNOLOGIES, INC) 17 September 2003 (2003-09-17) * paragraph [0001] - paragraph [0005] * * paragraph [0031] - paragraph [0037] * * figures 4-6 * ----- | 1-6 | |
| A | RODRIGUEZ MONDEJAR J A ET AL: "Low cost implementation of mathematical functions using piecewise interpolation" ALGORITHMS AND ARCHITECTURES FOR REAL-TIME CONTROL 2000 (AARTC'2000) - A PROCEEDINGS VOLUME FROM THE 6TH IFAC WORKSHOP, PALMA DE MALLORCA, SPAIN, 15-17 MAY 2000, 2000, pages 193-198, XP008066853 Elsevier Science Ltd * abstract * * section 2 * * figures 1,2,7 * * section 5 * ----- -/-- | 1-6 | TECHNICAL FIELDS SEARCHED (IPC) |

The present search report has been drawn up for all claims

| Place of search | Date of completion of the search | Examiner |
|---|---|---|
| Berlin | 28 August 2006 | Domingo Vecchioni, M |

EPO FORM 1503 03.82 (P04C01)

**European Patent Office**

**EUROPEAN SEARCH REPORT**

Application Number

EP 05 01 9125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAVIES S: "Multidimensional triangulation and interpolation for reinforcement learning" PROCEEDINGS OF THE 1996 CONFERENCE ON ADVANCES IN NEURAL INFORMATION PROCESSING SYSTEMS, 2-5 DECEMBER 1996, DENVER, 1997, pages 1005-1011, XP002391611 MIT PRESS LONDON, UK ISBN: 0-262-10065-7 Retrieved from the Internet: URL:http://www.cs.cmu.edu/˜scottd/nips96.ps> [retrieved on 2006-07-21] * abstract * * section 1.1 * ----- | 1-6 | |
| A | CERN: "CERNLIB - CERN Program Library Short writeups" 1996, CERN , GENEVA , XP002391617 Retrieved from the Internet: URL:http://grdelin.phy.hr/˜ivo/Nastava/Numericke_methode/literatura/cernlib.pdf> [retrieved on 2006-07-21] * page 148 - page 149 * ----- | 1-6 | TECHNICAL FIELDS SEARCHED (IPC) |

The present search report has been drawn up for all claims

| Place of search | Date of completion of the search | Examiner |
|---|---|---|
| Berlin | 28 August 2006 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

**EP 1 760 603 A1**

## ANNEX TO THE EUROPEAN SEARCH REPORT
## ON EUROPEAN PATENT APPLICATION NO.

EP 05 01 9125

28-08-2006

| Patent document cited in search report | | Publication date | Patent family member(s) | | Publication date |
|---|---|---|---|---|---|
| DE 4304441 | A1 | 18-08-1994 | JP | 3512845 B2 | 31-03-2004 |
| | | | JP | 6259101 A | 16-09-1994 |
| DE 19963213 | A1 | 12-07-2001 | US | 2001027358 A1 | 04-10-2001 |
| EP 1344921 | A | 17-09-2003 | AT | 311532 T | 15-12-2005 |
| | | | DE | 60302479 D1 | 05-01-2006 |
| | | | US | 2004000294 A1 | 01-01-2004 |

EPO FORM P0459